(19) **Europäisches Patentamt / European Patent Office / Office européen des brevets**

(11) **EP 4 549 998 A1**

(12) **EUROPEAN PATENT APPLICATION**
published in accordance with Art. 153(4) EPC

(43) Date of publication:
07.05.2025 Bulletin 2025/19

(21) Application number: 23829834.3

(22) Date of filing: 31.05.2023

(51) International Patent Classification (IPC):
*G01S 13/86* (2006.01)    *G01C 21/16* (2006.01)
*G01S 19/48* (2010.01)

(52) Cooperative Patent Classification (CPC):
G01C 21/16; G01C 21/20; G01S 13/86;
G01S 17/89; G01S 17/93; G01S 19/48

(86) International application number:
PCT/CN2023/097297

(87) International publication number:
WO 2024/001649 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.06.2022 CN 202210746832

(71) Applicant: Hai Robotics Co., Ltd.
Shenzhen, Guangdong 518000 (CN)

(72) Inventors:
• JIA, Wenna
  Shenzhen, Guangdong 518000 (CN)
• LIU, Shujin
  Shenzhen, Guangdong 518000 (CN)
• XIA, Peng
  Shenzhen, Guangdong 518000 (CN)
• LIU, Xiaogao
  Shenzhen, Guangdong 518000 (CN)

(74) Representative: Gulde & Partner
Patent- und Rechtsanwaltskanzlei mbB
Berliner Freiheit 2
10785 Berlin (DE)

(54) **ROBOT POSITIONING METHOD, APPARATUS AND COMPUTING READABLE STORAGE MEDIUM**

(57) This application relates to a robot position determination method and device, and a computer-readable storage medium. The method includes: obtaining laser point cloud data by using a laser sensor carried by a robot; obtaining pose data of the robot by using a motion sensor carried by the robot; performing calculation according to a navigation QR code and the pose data of the robot obtained by the motion sensor and based on an extended Kalman filter, to obtain a prior pose of the robot; matching the laser point cloud data with a robot map based on the prior pose of the robot, to obtain a first pose of the robot; and fusing the first pose of the robot with a second pose currently outputted by the extended Kalman filter, to obtain a final pose of the robot. By using the solutions provided in this application, the accuracy of robot position determination can be improved.

Obtain laser point cloud data by using a laser sensor carried by a robot — S101

Obtain pose position data of the robot by using a motion sensor carried by the robot — S102

Perform calculation according to a navigation QR code and the pose position data of the robot obtained by the motion sensor and based on an extended Kalman filter, to obtain a prior pose position of the robot — S103

Match the laser point cloud data with a robot map based on the prior pose position of the robot, to obtain a first pose position of the robot — S104

Fuse the first pose position of the robot with a second pose position currently outputted by the extended Kalman filter, to obtain a final pose position of the robot — S105

Figure 1'

## Description

CROSS-REFERENCES

This application claims priority to Chinese Patent Application No. 202210746832.2, entitled "ROBOT POSITION DETERMINATION METHOD AND DEVICE, AND COMPUTER-READABLE STORAGE MEDIUM", filed with the China National Intellectual Property Administration on June 29, 2022, which is incorporated herein by reference in its entirety.

TECHNICAL FIELD

This application relates to the field of artificial intelligence, and in particular, to a robot position determination method and device, and a computer-readable storage medium.

BACKGROUND OF THE INVENTION

With the development of artificial intelligence (Artificial Intelligence, AI) technology, some robots endowed with AI are widely used in catering, medical, warehousing, and other fields. The key point to the application of these AI robots is to perform accurate position determination on the robots. This is because only accurate position determination performed on the robots can enable the robots to arrive at destinations smoothly to complete given tasks. In the related art, a robot position determination method is a position determination method based on QR codes. Specifically, several QR codes for navigation are affixed to a work site of a robot. These QR codes include information about the orientation of the robot at these positions. Therefore, as long as the robot can observe a navigation QR code, a position of the robot can be determined by decoding information included therein.

Apparently, the premise of the foregoing position determination method based on the QR codes is that the robot can observe the navigation QR code. However, in an actual application scenario, a spacing between navigation QR codes at a work site of a robot is large, or navigation QR codes cannot be affixed for various reasons. For example, when a spacing between navigation QR codes is more than one meter, once a robot cannot observe a navigation QR code for a long period of time or after running for a long distance, position determination is not accurate or a cumulative error continuously increases, and consequently the robot goes astray or even cannot continue to execute a task.

SUMMARY OF THE INVENTION

To resolve or partially resolve the problems in the related art, this application provides a robot position determination method and device, and a computer-readable storage medium, which can improve the accuracy of robot position determination.

According to a first aspect of this application, a robot position determination method is provided, including:

> obtaining laser point cloud data by using a laser sensor carried by a robot;
> obtaining pose data of the robot by using a motion sensor carried by the robot;
> performing calculation according to a navigation QR code and the pose data and based on an extended Kalman filter, to obtain a prior pose of the robot;
> matching the laser point cloud data with a robot map based on the prior pose of the robot, to obtain a first pose of the robot; and
> fusing the first pose of the robot with a second pose currently outputted by the extended Kalman filter, to obtain a final pose of the robot.

According to a second aspect of this application, a robot position determination device is provided, including:

> a first obtaining module, configured to obtain laser point cloud data by using a laser sensor carried by a robot;
> a second obtaining module, configured to obtain pose data of the robot by using a motion sensor carried by the robot;
> a calculation module, configured to perform calculation according to a navigation QR code and the pose data and based on an extended Kalman filter, to obtain a prior pose of the robot;
> a matching module, configured to match the laser point cloud data with a robot map based on the prior pose of the robot, to obtain a first pose of the robot; and
> a fusion module, configured to fuse the first pose of the robot with a second pose currently outputted by the extended Kalman filter, to obtain a final pose of the robot.

According to a third aspect of this application, an electronic device is provided, including:

> a processor; and
> a memory, storing executable code, where when the executable code is executed by the processor, the processor is enabled to perform the foregoing method.

According to a fourth aspect of this application, a computer-readable storage medium is provided, storing executable code, where when the executable code is executed by a processor of an electronic device, the processor is enabled to perform the foregoing method.

As can be learned from the technical solutions provided in this application, in the technical solutions of this application, calculation is performed according to the navigation QR code and the pose data obtained by the motion sensor and based on the extended Kalman filter, to obtain the prior pose of the robot; the laser point cloud data is matched with the robot map based on the prior pose of the robot, to obtain the first pose of the robot; and the first pose of the robot is finally fused with the second pose currently outputted by the extended Kalman filter, to obtain the final pose of the robot. Compared with absolute dependence on navigation QR codes to obtain a pose of a robot in the related art, in the technical solutions of this application, pose data obtained by various sensors is fused based on navigation QR codes. In this case, pose data of a robot can still be obtained even when the navigation QR codes are distributed sparsely, to determine a position of the robot accurately.

It should be understood that the foregoing general descriptions and the following detailed descriptions are merely for illustration and explanation purposes, and are not intended to limit this application.

BRIEF DESCRIPTION OF DRAWINGS

The exemplary implementations of this application are described in detail with reference to the accompanying drawings. The foregoing and other objectives, features, and advantages of this application become more apparent. In the exemplary implementations of this application, the same reference marks usually represent the same components.

FIG. 1 is a schematic flowchart of a robot position determination method according to an embodiment of this application;
FIG. 2 is a schematic diagram of aligning data of a plurality of sensors at timestamps according to an embodiment of this application;
FIG. 3 is a schematic diagram of a structure of a robot position determination device according to an embodiment of this application; and
FIG. 4 is a schematic diagram of a structure of an electronic device according to an embodiment of this application.

DETAILED DESCRIPTION

The following describes in detail the implementations of this application with reference to the accompanying drawings. The implementations of this application are shown in the accompanying drawings. However, it should be understood that this application can be implemented in various forms and should not be limited by the implementations described herein. Conversely, these implementations are provided to make this application more thorough and complete, and completely convey the scope of this application to a person skilled in the art.

The terms used in this application are for the purpose of describing specific embodiments only and are not intended to limit this application. The singular forms of "a" and "the" used in this application and the appended claims are intended to include the plural forms as well, unless the context clearly indicates otherwise. It should be further understood that the term "and/or" used herein indicates and includes any or all possible combinations of one or more associated listed items.

It should be understood that although the terms, such as "first", "second", and "third", may be used in this application to describe various information, the information should not be limited to these terms. These terms are merely used to distinguish between information of the same type. For example, without departing from the scope of this application, first information may also be referred to as second information, and similarly, second information may also be referred to as first information. Therefore, a feature limited by "first" or "second" may explicitly or implicitly include one or more of the features. In the descriptions of this application, "plurality of" means two or more, unless otherwise definitely and specifically limited.

The key point to application of AI robots is to perform accurate position determination on the robots. This is because only accurate position determination performed on the robots can enable the robots to arrive at destinations smoothly to complete given tasks. In the related art, a robot position determination method is a position determination method based on QR codes. Specifically, several QR codes for navigation are affixed to a work site of a robot. These QR codes include information about the orientation of the robot at these positions. Therefore, as long as the robot can observe a navigation QR code, a position of the robot can be determined by decoding information included therein. Apparently, the premise of the foregoing position determination method based on the QR codes is that the robot can observe the navigation QR code. However, in an actual application scenario, a spacing between navigation QR codes at a work site of a robot is large, or navigation QR codes cannot be affixed for various reasons. For example, when a spacing between navigation QR codes is more than one meter, once a robot cannot observe a navigation QR code for a long period of time or after running for a long distance, position determination is not accurate or a cumulative error continuously increases, and consequently the robot goes astray or even cannot continue to execute a task.

To resolve the foregoing problems, the embodiments of this application provide a robot position determination method, which can improve the accuracy of robot position determination.

The following describes in detail the technical solutions of the embodiments of this application with reference to the accompanying drawings.

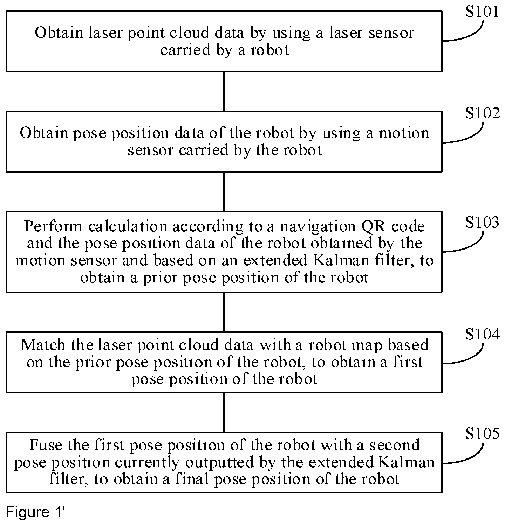

FIG. 1 is a schematic flowchart of a robot position determination method according to an embodiment of this application, which mainly includes operations S101 to S105, as described below:

In block S101: Obtain laser point cloud data by using a laser sensor carried by a robot.

The laser point cloud data is information carried by points returned from a surface of a target hit by a laser beam from the laser sensor through scanning. The laser point cloud means that there are usually many points (usually in ten thousand or in hundred thousand) returned from the surface of the target, which are similar to a cloud. The information, such as three-dimensional coordinates, the texture of the target, reflection intensity, and return frequency, carried by the laser point cloud is the laser point cloud data. In an embodiment of this application, the laser sensor carried by the robot may be a lidar, a millimeter wave radar, or another 2D laser sensor.

To recognize an environment around the robot and avoid obstacles to a larger extent, in an embodiment of this application, the laser sensor carried by the robot may be at least one 2D laser sensor deployed on the robot (at the front or rear, left or right, or diagonal position of the robot, where a specific deployment position is not limited in this application). There may be a mounting position error when at least two 2D laser sensors are mounted, or after the robot runs for a period of time, there is an error at mounting positions of at least two 2D laser sensors that are originally registered. Considering that one single 2D laser sensor has a scanning range of 270°, when data of the at least one 2D laser sensor mounted is spliced, there is bound to be a data overlap. When the at least two 2D laser sensors have the error, data obtained by the at least two 2D laser sensors cannot match exactly at the overlap. Therefore, in an embodiment of this application, when the laser sensor carried by the robot is at least one 2D laser sensor deployed on the robot, the at least one 2D laser sensor is calibrated offline before the laser point cloud data is obtained by using the laser sensor carried by the robot, to obtain a mounting position error of the at least one 2D laser sensor. After the mounting position error of the at least one 2D laser sensor is obtained, when data of the at least one 2D laser sensor mounted needs to be spliced, the mounting position error may be used as compensation data, so that the data obtained by the at least one 2D laser sensor can match exactly at a scanning overlap.

In the foregoing embodiment, the offline calibration of the at least two 2D laser sensors may indicate that when the robot moves in a specific test site in a favorable environment (for example, a sunny day, good lighting, and a dense arrangement of navigation QR codes, to ensure that the robot can observe the navigation QR codes most of the time), coordinate transformation is performed on a pose obtained from a navigation QR code and a pose of the robot obtained through map matching performed by using only the at least two 2D laser sensors with no other sensors involved, and calculation may be performed based on an obtained transformation matrix to obtain actual mounting positions of the at least two 2D laser sensors, to further obtain the mounting position error of the at least two 2D laser sensors. It can be learned from the foregoing embodiment that although the at least two 2D laser sensors can be calibrated offline to obtain the mounting position error of the at least two 2D laser sensors, offline calibration is more demanding on the test site. In another embodiment of this application, at least two 2D laser sensors are calibrated online before the laser point cloud data is obtained by using the laser sensor carried by the robot, to obtain a mounting position error of the at least two 2D laser sensors. The online calibration indicates that the at least two 2D laser sensors can be calibrated by using various sensors deployed on the robot while the robot is running in any site. Compared with the offline calibration, the online calibration is not overly site-restricted, and thus can be performed at any time, which is the advantage. In addition, as described above, after the robot runs for a period of time, there may be an error at mounting positions of the at least two 2D laser sensors that are originally registered. Therefore, the online calibration can resolve in real time the problem of the mounting position error of the 2D laser sensor caused by long-time running of the robot.

As an embodiment of this application, that at least one 2D laser sensor is calibrated online, to obtain a mounting position error of the at least one 2D laser sensor may include: performing feature point matching on image data obtained by a visual device, to obtain a reprojection error corresponding to a feature point; performing pose correction and registering on two frames of point clouds in laser point cloud data obtained by any one of the at least one 2D laser sensor, and calculating a relative pose between the two frames of point clouds; calculating a pose deviation between the two frames of point clouds based on the pose data obtained by the motion sensor; and performing iterative optimization based on the reprojection error corresponding to the feature point, the relative pose between the two frames of point clouds, and the calculated pose deviation between the two frames of point clouds for a solution within specified duration, and obtaining an actual mounting position of the at least one 2D laser sensor. After the actual mounting position of the at least one 2D laser sensor is obtained, the actual mounting position of the at least one 2D laser sensor is subtracted to obtain the mounting position error of the at least one 2D laser sensor. In the foregoing embodiment, the visual device may be a visual sensor such as a monocular camera, a binocular camera, or a depth camera, and the motion sensor may be a wheeled odometer or an inertial measurement unit (Inertial Measurement Unit, IMU).

In block S102: Obtain pose data of the robot by using a motion sensor carried by the robot.

In an embodiment of this application, the motion sensor carried by the robot may be the sensor mentioned above such as the wheeled odometer or the inertial measurement unit IMU, and the pose data of the robot obtained by using the motion sensor includes information of the robot, such as three-dimensional coordinates, acceleration, speed, and orientation.

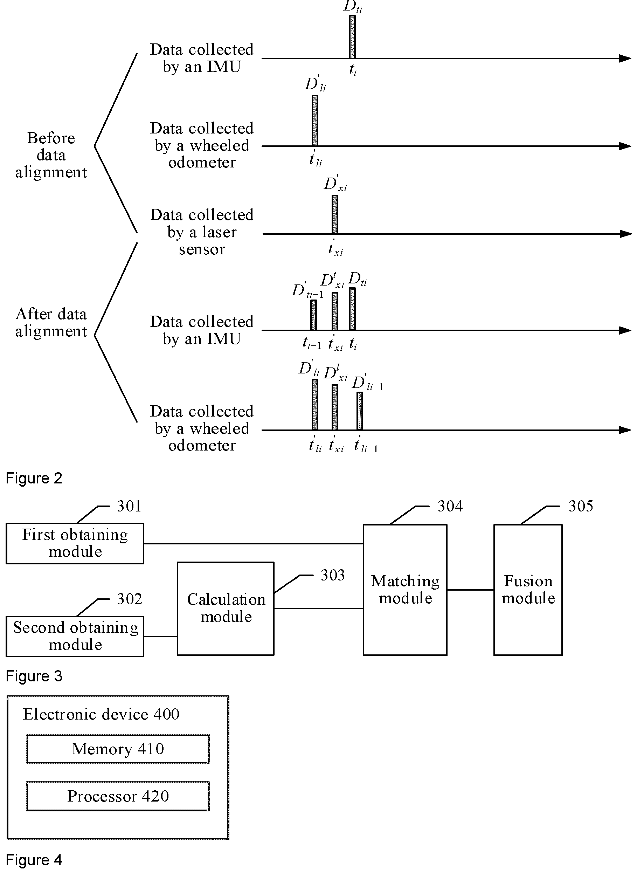

It needs to be noted that the sensor requires specific time dt from data obtaining to outputting. In this case, real data collection time for the sensor should be T-dt, where T is actual UTC time given by the supplier of the sensor for this frame of output. As different sensors have inconsistent sampling frequencies even after hardware synchronization, there is bound to be the problem of non-synchronization of data obtained by the sensors at timestamps in fusion of various sensors for position determination. In view of the foregoing fact, in an embodiment of this application, the laser point cloud data is aligned with the pose data of the robot temporally after the laser point cloud data is obtained by using the laser sensor carried by the robot and the pose data of the robot is obtained by using the motion sensor carried by the robot. Specifically, considering that a linear interpolation algorithm has the advantages of simplicity and small calculation amount, that the laser point cloud data is aligned with the pose data of the robot temporally may include: aligning timestamps of the laser point cloud data and the pose data of the robot by using a linear interpolation algorithm. Using an example in which the motion sensor in the foregoing embodiment includes an inertial measurement unit IMU and a wheeled odometer, as shown in FIG. 2, assuming that pose data of the robot obtained by the IMU at a moment $t_i$ is $D_{ti}$, ideally the wheeled odometer can also obtain pose data of the robot at the moment $t_i$. However, due to inconsistent sampling frequencies and other reasons, the wheeled odometer can only obtain pose data $D_{li}'$ of the robot at a moment $t_{li}'$. This is the case where data of the sensors are not aligned at timestamps. There is also the case where the laser point cloud data collected by the laser sensor is not aligned with the data collected by the IMU and the wheeled odometer at timestamps. To be specific, due to inconsistent sampling frequencies and other reasons, when the pose data of the robot obtained by the IMU at the moment $t_i$ is $D_{ti}$, the laser sensor can only obtain laser point cloud data $D_{xi}'$ at a moment. The foregoing cases require a data alignment scheme.

In an embodiment of this application, that the timestamps of the laser point cloud data and the pose data of the robot are aligned by using the linear interpolation algorithm may include: performing interpolation on pose data of the robot by using pose data of the robot obtained by the IMU at adjacent timestamps before and after a current frame of laser point cloud data, to align pose data of the robot obtained through the interpolation with the current frame of laser point cloud data collected by the laser sensor; and performing interpolation on pose data of the robot by using pose data of the robot obtained by the wheeled odometer at adjacent timestamps before and after the current frame of laser point cloud data, to align pose data of the robot obtained through the interpolation with the current frame of laser point cloud data collected by the laser sensor. Still using FIG. 2 as an example, the interpolation is performed on the pose data of the robot by using the pose data of the robot obtained by the IMU at the adjacent timestamps before and after the current frame of laser point cloud data, that is, by using pose data $D_{ti-1}'$ of the robot at a moment $t_{i-1}$ and pose data $D_{ti}$ of the robot at a moment $t_i$, to obtain interpolated pose data $D_{xi}^t$ of the robot at the moment $t_{xi}'$. As can be seen from FIG. 2, through the interpolation operation described above, the interpolated pose data $D_{xi}^t$ of the robot has been aligned with the current frame of laser point cloud data $D_{xi}'$ collected by the laser sensor. Similarly, the interpolation is performed on the pose data of the robot by using the pose data of the robot obtained by the wheeled odometer at the adjacent timestamps before and after the current frame of laser point cloud data, that is, by using pose data $D_{li}'$ of the robot at a moment $t_{li}'$ and pose data $D_{li+1}'$ of the robot at a moment $t_{li+1}'$, to obtain interpolated pose data $D_{xi}^l$ of the robot at the moment $t_{xi}'$. As can be seen from FIG. 2, through the interpolation operation described above, the interpolated pose data $Dx_l$ of the robot has been aligned with the current frame of laser point cloud data $D_{xi}'$ collected by the laser sensor.

In block S103: Perform calculation according to a navigation QR code and kinematic data and based on an extended Kalman filter, to obtain a prior pose of the robot.

In an embodiment of this application, the navigation QR code includes position information of the robot and pose information of the robot obtained by the IMU carried by the robot when the robot moves to a position to which the navigation QR code is affixed. The pose information has a high confidence level, and thus can be used as an observed value for the extended Kalman filter to calculate pose information of the robot. The data obtained by the wheeled odometer carried by the robot can be used as a prior value for the extended Kalman filter to calculate pose information of the robot. As an algorithm that uses a state equation of a linear system, Kalman filtering (Kalman filtering) can perform optimal estimation on the system state based on observed data inputted and outputted by the system. In other words, the Kalman filtering can process the observed data inputted by the system, to obtain an estimated value of a real signal with a minimum error. The extended Kalman filter (Extended Kalman Filter, EKF) can perform first-order linearization truncation on the Taylor (Taylor) expansion of a nonlinear function, and omit the remaining higher-order terms, to transform a nonlinear problem into a linear problem. Therefore, in an embodiment of this application, after the position information of the robot carried by the navigation QR code and the pose data of the robot obtained by the motion sensor (where the navigation QR code includes position information of the robot and pose information of the robot obtained by the IMU carried by the robot when the robot moves to a position to which the navigation QR code is affixed, the pose information is used as an observed value for the extended Kalman filter to calculate pose information of the robot, and the data obtained by the wheeled odometer carried by the robot can be used as a prior value for the extended Kalman filter to calculate pose information of the robot) are obtained, calculation may be performed according to the navigation QR code and the kinematic data and based on the extended Kalman filter, to obtain the prior pose of the robot. Specifically, that the calculation is performed to obtain the prior pose of the robot may include: obtaining target pose information of the robot at a moment k-1 (that is, the previous moment of a moment k); determining an estimated value of pose information of the robot at the moment k based on the pose data of the robot (including the pose information of the robot obtained by the IMU carried by the robot and the pose information of the robot obtained by the wheeled odometer carried by the robot) obtained by the motion sensor and the target pose information of the robot at the moment k-1; obtaining an estimated value of a covariance matrix of the robot at the moment k; determining a Kalman gain based on the estimated value of the covariance matrix of the robot at the moment k; and determining the target pose information of the robot at the moment k as the prior pose of the robot based on the position information of the robot when the robot moves to the position to which the navigation QR code is affixed, the estimated value of the pose information of the robot at the moment k, and the Kalman gain.

In block S104: Match the laser point cloud data with a robot map based on the prior pose of the robot, to obtain a first pose of the robot.

In the environment where the robot moves, in addition to immovable objects such as walls and shelving units, there are movable targets such as moving people, robots, or other objects. These movable targets are interference to robot position determination or noise to data matching. Therefore, in the foregoing embodiment, laser point cloud data corresponding to a movable target is eliminated from the laser point cloud data by using a data association algorithm before the laser point cloud data is matched with the robot map based on the prior pose of the robot. The data association algorithm may be a joint compatibility branch and bound (Joint Compatibility Branch and Bound, JCBB) data association algorithm, an individual compatibility nearest neighbor (Individual Compatibility Nearest Neighbor, ICNN) data association algorithm, or an improvement thereof. For example, considering the contradiction between association precision and calculation efficiency of the JCBB algorithm and the ICNN algorithm for data association, in an embodiment of this application, a hybrid adaptive data association scheme based on an association criterion may be designed. To be specific, under the constraints of the basic criterion for data association, whether a data association result based on the ICCN algorithm is correct is determined. If it is determined that the data association result is incorrect, data association is performed again based on the JCBB algorithm, to improve association precision and association efficiency.

In the foregoing embodiment, the robot map may be a two-dimensional grid map. The two-dimensional grid map is also referred to as a two-dimensional grid probability map or a two-dimensional occupancy grid map (Occupancy Grid Map). This map divides a plane into grids and assigns one occupancy (Occupancy) to each grid. The occupancy is a probability of a state in which a grid is occupied by an obstacle (occupied state), a state in which a grid is free of obstacles (free state), or a state between the two states on the two-dimensional occupancy grid map. The state in which a grid is occupied by an obstacle is denoted by 1, the state in which a grid is free of obstacles is denoted by 0, and the state between the two states is denoted by a value between 0 and 1. Apparently, the occupancy indicates a probability that a grid is occupied by an obstacle. Larger occupancy of a grid indicates a larger probability that the grid is occupied by an obstacle. Conversely, smaller occupancy of a grid indicates a smaller probability that the grid is occupied by an obstacle. Considering that a short calculation cycle of the extended Kalman filter and a long calculation cycle of matching the laser point cloud data with the robot map, the laser point cloud data may be matched with the robot map based on the prior pose of the robot, to obtain the first pose of the robot. Corresponding to a case in which the robot map is a two-dimensional grid map, in the foregoing embodiment, that the laser point cloud data is matched with the robot map based on the prior pose of the robot to obtain the first pose of the robot may specifically include: determining a plurality of candidate poses in pose search space based on the prior pose of the robot; projecting the laser point cloud data to the two-dimensional grid map based on each of the plurality of candidate poses, and calculating a matching score of each of the plurality of candidate poses on the two-dimensional grid map; and determining a candidate pose with a highest matching score in the plurality of candidate poses on the two-dimensional grid map as the first pose of the robot. The determining a plurality of candidate poses in pose search space based on the prior pose of the robot specifically includes searching for the plurality of candidate poses of the robot near the prior pose of the robot by using the Ceres solver. When the matching score of each of the plurality of candidate poses on the two-dimensional grid map is calculated, a nonlinear least squares problem may be constructed using the pose of the robot as a state, and the pose of the robot may be optimized iteratively using an error E1 as an error constraint of the nonlinear least squares problem, until the error E1 is the smallest. Herein, the error E1 is a difference between an estimated pose of the robot and an observed value of a global pose. When the error E1 is the smallest, a specific candidate pose in the plurality of candidate poses has the highest matching score on the two-dimensional grid map, and then the specific candidate pose is determined as the first pose of the robot.

In block S105: Fuse the first pose of the robot with a second pose currently outputted by the extended Kalman filter, to obtain a final pose of the robot.

According to an aspect, as the motion sensor, for example, the wheel odometer, has a cumulative error, this error value needs to be corrected by another sensor, and as there is also an error of the two-dimensional grid map in matching the laser point cloud data with the robot map, the cumulative error of the two-dimensional grid map needs to be eliminated through matching optimization and based on an accurate prior value. According to another aspect, the first pose of the robot obtained by matching the laser point cloud data with the robot map, the second pose currently outputted by the extended Kalman filter, and the prior pose of the robot obtained through calculation according to the navigation QR code and the pose data obtained by the motion sensor and based on the extended Kalman filter have different data. Robot states obtained by using different methods require data fusion to obtain a more credible and accurate value. Therefore, in an embodiment of this application, the first pose of the robot may be fused with the second pose currently outputted by the extended Kalman filter, to obtain the final pose of the robot. Specifically, a difference between the first pose of the robot and the prior pose of the robot may be calculated, to obtain a pose deviation; and a sum of the pose deviation and the second pose currently outputted by the extended Kalman filter may be calculated, to obtain the final pose of the robot. Herein, the second pose currently outputted by the extended Kalman filter is pose data of the robot obtained through calculation by using the navigation QR code and the pose data of the robot obtained by the motion sensor as an input of the extended Kalman filter.

As can be learned from the robot position determination method shown in FIG. 1, in the technical solutions of this application, calculation is performed according to the navigation QR code and the kinematic data obtained by the motion sensor and based on the extended Kalman filter, to obtain the prior pose of the robot; the laser point cloud data is matched with the robot map based on the prior pose of the robot, to obtain the first pose of the robot; and the first pose of the robot is finally fused with the second pose currently outputted by the extended Kalman filter, to obtain the final pose of the robot. Compared with absolute dependence on navigation QR codes to obtain a pose of a robot in the related art, in the technical solutions of this application, pose data obtained by various sensors is fused based on navigation QR codes. In this case, pose data of a robot can still be obtained even when the navigation QR codes are distributed sparsely, to determine a position of the robot accurately.

FIG. 3 is a schematic diagram of a structure of a robot position determination device according to an embodiment of this application. For ease of description, only the parts relevant to the embodiments of this application are shown. The robot position determination device shown in FIG. 3 mainly includes a first obtaining module 301, a second obtaining module 302, a calculation module 303, a matching module 304, and a fusion module 305.

The first obtaining module 301 is configured to obtain laser point cloud data by using a laser sensor carried by a robot.

The second obtaining module 302 is configured to obtain pose data of the robot by using a motion sensor carried by the robot.

The calculation module 303 is configured to perform calculation according to a navigation QR code and the pose data of the robot obtained by the motion sensor and based on an extended Kalman filter, to obtain a prior pose of the robot.

The matching module 304 is configured to match the laser point cloud data with a robot map based on the prior pose of the robot, to obtain a first pose of the robot.

The fusion module 305 is configured to fuse the first pose of the robot with a second pose currently outputted by the extended Kalman filter, to obtain a final pose of the robot.

The specific manner in which each module in the device in the foregoing embodiment performs an operation has been described in detail in the embodiment relevant to the method. Details are not described herein.

As can be learned from the robot position determination device shown in FIG. 3, in the technical solutions of this application, calculation is performed according to the navigation QR code and the kinematic data obtained by the motion sensor and based on the extended Kalman filter, to obtain the prior pose of the robot; the laser point cloud data is matched with the robot map based on the prior pose of the robot, to obtain the first pose of the robot; and the first pose of the robot is finally fused with the second pose currently outputted by the extended Kalman filter, to obtain the final pose of the robot. Compared with absolute dependence on navigation QR codes to obtain a pose of a robot in the related art, in the technical solutions of this application, pose data obtained by various sensors is fused based on navigation QR codes. In this case, pose data of a robot can still be obtained even when the navigation QR codes are distributed sparsely, to determine a position of the robot accurately.

FIG. 4 is a schematic diagram of a structure of an electronic device according to an embodiment of this application.

As shown in FIG. 4, the electronic device 400 includes a memory 410 and a processor 420.

The processor 420 may be a central processing unit (Central Processing Unit, CPU), or may be another general-purpose processor, a digital signal processor (Digital Signal Processor, DSP), an application specific integrated circuit (Application Specific Integrated Circuit, ASIC), a field-programmable gate array (Field-Programmable Gate Array, FPGA) or another programmable logic device, a discrete gate or transistor logic device, a discrete hardware component, or the like. The general-purpose processor may be a microprocessor, or the processor may be any conventional processor or the like.

The memory 410 may include various types of storage units, such as a system memory, a read-only memory (ROM), and a permanent storage device. The ROM may store static data or instructions required by the processor 420 or other modules of the computer. The permanent storage device may be a readable-writable storage device. The permanent storage device may be a non-volatile storage device that does not lose stored instructions and data even after the computer is powered down. In some implementations, a mass storage device (such as a magnetic disk, an optical disc, or a flash memory) is used as the permanent storage device. In some other implementations, the permanent storage device may be a removable storage device (such as a floppy disk or an optical disc driver). The system memory may be a readable-writable storage device or a volatile readable-writable storage device, for example, a dynamic random access memory. The system memory may store some or all instructions and data required by the processor for operation. In addition, the memory 410 may include any combination of computer-readable storage media, including various types of semiconductor memory chips (such as a DRAM, an SRAM, an SDRAM, a flash memory, and a programmable read-only memory), and a magnetic disk and/or an optical disc may also be used. In some implementations, the memory 410 may include a readable and/or writable removable storage device, such as a compact disc (CD), a read-only digital versatile optical disc (such as a DVD-ROM or a dual-layer DVD-ROM), a read-only blue-ray disc, an ultra-dense optical disc, a flash memory card (such as an SD card, a mini SD card, or a micro-SD card), or a magnetic floppy disk. The computer-readable storage medium does not include a carrier and an instantaneous electronic signal transmitted in a wireless or wired manner.

The memory 410 stores executable code. When the executable code is processed by the processor 420, the processor 420 may be enabled to perform some or all of the method described above.

In addition, the method according to this application may be further implemented as a computer program or a computer program product. The computer program or the computer program product includes computer program code instructions for performing some or all steps of the foregoing method in this application.

Alternatively, this application may be implemented as a computer-readable storage medium (or a non-transitory machine-readable storage medium or a machine-readable storage medium) storing executable code (or a computer program or computer instruction code). When the executable code (or the computer program or the computer instruction code) is executed by a processor of an electronic device (or a server), the processor is enabled to perform some or all steps of the foregoing method according to this application.

The embodiments of this application are described above. The foregoing descriptions are examples, are not exhaustive, and are not limited to the disclosed embodiments. Many modifications and changes are clear to a person of ordinary skill in the art without departing from the scope and spirit of the described embodiments. The selection of terms used in this specification is intended to best explain the principles of the embodiments, practical application, or improvements to technologies in the market, or to enable another person of ordinary skill in the art to understand the embodiments disclosed in this specification.

## Claims

1. A robot position determination method, comprising:

   obtaining laser point cloud data by using a laser sensor carried by a robot;
   obtaining pose data of the robot by using a motion sensor carried by the robot;
   performing calculation according to a navigation QR code and the pose data and based on an extended Kalman filter, to obtain a prior pose of the robot;
   matching the laser point cloud data with a robot map based on the prior pose of the robot, to obtain a first pose of the robot; and
   fusing the first pose of the robot with a second pose currently outputted by the extended Kalman filter, to obtain a final pose of the robot.

2. The robot position determination method according to claim 1, wherein the laser sensor comprises at least one 2D laser sensor deployed on the robot, and the method further comprises:
   calibrating the at least one 2D laser sensor offline or online before the obtaining laser point cloud data by using a laser sensor carried by a robot, to obtain a mounting position error of the at least one 2D laser sensor.

3. The robot position determination method according to claim 2, wherein the calibrating the at least one 2D laser sensor online to obtain a mounting position error of the at least one 2D laser sensor comprises:

   performing feature point matching on image data obtained by a visual device, to obtain a reprojection error corresponding to a feature point;

performing pose correction and registering on two frames of point clouds in laser point cloud data obtained by any one of the at least one 2D laser sensor, and calculating a relative pose between the two frames of point clouds;

calculating a pose deviation between the two frames of point clouds based on the pose data obtained by the motion sensor; and

performing iterative optimization based on the reprojection error, the relative pose, and the pose deviation for a solution within specified duration, and obtaining an actual mounting position of the at least one 2D laser sensor, to obtain the mounting position error of the at least one 2D laser sensor.

4. The robot position determination method according to claim 1, further comprising:
aligning, after the obtaining laser point cloud data by using a laser sensor carried by a robot and the obtaining pose data of the robot by using a motion sensor carried by the robot, the laser point cloud data with the pose data of the robot temporally.

5. The robot position determination method according to claim 4, wherein the aligning the laser point cloud data with the pose data of the robot temporally comprises:
aligning timestamps of the laser point cloud data and the pose data of the robot by using a linear interpolation algorithm.

6. The robot position determination method according to claim 1, further comprising:
eliminating, before the matching the laser point cloud data with a robot map based on the prior pose of the robot, laser point cloud data corresponding to a movable target from the laser point cloud data by using a data association algorithm.

7. The robot position determination method according to claim 1, wherein the robot map is a two-dimensional grid map, and the matching the laser point cloud data with a robot map based on the prior pose of the robot, to obtain a first pose of the robot comprises:

determining a plurality of candidate poses in pose search space based on the prior pose of the robot;

projecting the laser point cloud data to the two-dimensional grid map based on each of the plurality of candidate poses, and calculating a matching score of each candidate pose on the two-dimensional grid map; and

determining a candidate pose with a highest matching score in the plurality of candidate poses on the two-dimensional grid map as the first pose of the robot.

8. The robot position determination method according to claim 1, wherein the fusing the first pose of the robot with a second pose currently outputted by the extended Kalman filter, to obtain a final pose of the robot comprises:

calculating a difference between the first pose of the robot and the prior pose of the robot, to obtain a pose deviation; and

calculating a sum of the pose deviation and the second pose currently outputted by the extended Kalman filter, to obtain the final pose of the robot.

9. A robot position determination device, comprising:

a first obtaining module, configured to obtain laser point cloud data by using a laser sensor carried by a robot;

a second obtaining module, configured to obtain pose data of the robot by using a motion sensor carried by the robot;

a calculation module, configured to perform calculation according to a navigation QR code and the pose data and based on an extended Kalman filter, to obtain a prior pose of the robot;

a matching module, configured to match the laser point cloud data with a robot map based on the prior pose of the robot, to obtain a first pose of the robot; and

a fusion module, configured to fuse the first pose of the robot with a second pose currently outputted by the extended Kalman filter, to obtain a final pose of the robot.

10. An electronic device, comprising:

a processor; and

a memory, configured to store executable code, wherein when the executable code is executed by the processor, the processor is enabled to perform the method according to any one of claims 1 to 8.

11. A computer-readable storage medium, storing executable code, wherein when the executable code is executed by a processor of an electronic device, the processor is enabled to perform the method according to any one of claims 1 to 8.

| Obtain laser point cloud data by using a laser sensor carried by a robot | S101 |

| Obtain pose position data of the robot by using a motion sensor carried by the robot | S102 |

| Perform calculation according to a navigation QR code and the pose position data of the robot obtained by the motion sensor and based on an extended Kalman filter, to obtain a prior pose position of the robot | S103 |

| Match the laser point cloud data with a robot map based on the prior pose position of the robot, to obtain a first pose position of the robot | S104 |

| Fuse the first pose position of the robot with a second pose position currently outputted by the extended Kalman filter, to obtain a final pose position of the robot | S105 |

Figure 1'

$D_{ti}$

Data collected
by an IMU

$t_i$

$D'_{li}$

Data collected
by a wheeled
odometer

$t'_{li}$

Before
data
alignment

$D'_{xi}$

Data collected
by a laser
sensor

$t'_{xi}$

$D'_{ti-1}$ $D^t_{xi}$ $D_{ti}$

After data
alignment

Data collected
by an IMU

$t_{i-1}$ $t'_{xi}$ $t_i$

$D'_{li}$ $D^l_{xi}$ $D'_{li+1}$

Data collected
by a wheeled
odometer

$t'_{li}$ $t'_{xi}$ $t'_{li+1}$

Figure 2

301

First obtaining
module

302

Second obtaining
module

Calculation
module

303

Matching
module

304

Fusion
module

305

Figure 3

Electronic device 400

Memory 410

Processor 420

Figure 4

## INTERNATIONAL SEARCH REPORT

| International application No. |
|---|
| **PCT/CN2023/097297** |

### A. CLASSIFICATION OF SUBJECT MATTER

G01S13/86(2006.01)i; G01C21/16(2006.01)i; G01S19/48(2010.01)i

According to International Patent Classification (IPC) or to both national classification and IPC

### B. FIELDS SEARCHED

Minimum documentation searched (classification system followed by classification symbols)

IPC: G01C 21，G01S

Documentation searched other than minimum documentation to the extent that such documents are included in the fields searched

Electronic data base consulted during the international search (name of data base and, where practicable, search terms used)

CNABS, CNTXT, WPABS, ENTXTC, VEN, CNKI: 机器人, 定位, 位置, 定姿, 位姿, 姿态, 姿势, 二维码, 二维条码, 条形码, 路标, 标识, 激光, 雷达, 点云, 惯性, 惯导, 里程计, 里程表, 轮速, 编码器, 卡尔曼, robot?, locat+, localiz+, position+, pose, posture, two-demension, bar, QR, Apriltag, code?, tag?, laser, radar, lidar, cloud, inertial, IMU, INS, odometer?, kalman, EKF, KF

### C. DOCUMENTS CONSIDERED TO BE RELEVANT

| Category* | Citation of document, with indication, where appropriate, of the relevant passages | Relevant to claim No. |
|---|---|---|
| Y | CN 113538699 A (GUANGXI COMPREHENSIVE TRANSPORTATION BIG DATA RESEARCH INSTITUTE et al.) 22 October 2021 (2021-10-22) description, paragraphs [0049]-[0107] | 1-11 |
| Y | CN 113804184 A (SHANGHAI ZHIBUBANG INTELLIGENT TECHNOLOGY CO., LTD.) 17 December 2021 (2021-12-17) description, paragraphs [0082]-[0090] | 1-11 |
| Y | CN 112598757 A (ZHEJIANG LAB) 02 April 2021 (2021-04-02) description, paragraphs [0017]-[0032] | 2-3 |
| Y | CN 112964291 A (TSINGHUA UNIVERSITY) 15 June 2021 (2021-06-15) description, paragraphs [0027]-[0055] | 4-5 |
| Y | CN 112764053 A (SHENZHEN PUDU TECHNOLOGY CO., LTD.) 07 May 2021 (2021-05-07) description, paragraphs [0043]-[0051] | 7 |

☑ Further documents are listed in the continuation of Box C.　　☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **18 September 2023** | **19 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | International application No. |
| --- | --- |
| | **PCT/CN2023/097297** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 113091736 A (JINGDONG SHUKE HAIYI INFORMATION TECHNOLOGY CO., LTD.) 09 July 2021 (2021-07-09)<br>entire document | 1-11 |
| A | WO 2022105024 A1 (UBTECH ROBOTICS CORP. LTD.) 27 May 2022 (2022-05-27)<br>entire document | 1-11 |

Form PCT/ISA/210 (second sheet) (July 2022)

**INTERNATIONAL SEARCH REPORT**
Information on patent family members

International application No.

**PCT/CN2023/097297**

| Patent document cited in search report | | | Publication date (day/month/year) | Patent family member(s) | Publication date (day/month/year) |
|---|---|---|---|---|---|
| CN | 113538699 | A | 22 October 2021 | None | |
| CN | 113804184 | A | 17 December 2021 | None | |
| CN | 112598757 | A | 02 April 2021 | None | |
| CN | 112964291 | A | 15 June 2021 | None | |
| CN | 112764053 | A | 07 May 2021 | None | |
| CN | 113091736 | A | 09 July 2021 | None | |
| WO | 2022105024 | A1 | 27 May 2022 | None | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210746832